# EUROPÄISCHE PATENTANMELDUNG

(11) **EP 1 052 835 A2**
(43) Veröffentlichungstag der Anmeldung: **15.11.2000**
(21) Anmeldenummer: 00109765.8
(22) Anmeldetag: 09.05.2000
(51) Int. Cl.: H04M 3/30, H04M 3/00

(54) **Verfahren zur Fehlersuche bei analogen Teilnehmeranschlüssen**

(30) Priorität: 11.05.1999 DE 19921850
(71) Anmelder: Tenovis GmbH & Co. KG, 60362 Frankfurt (DE)
(72) Erfinder: Mueller, Richard, 65830 Kriftel (DE); Lenz, Oliver, 63579 Freigericht (DE); Sethaler, Volker, 65451 Kelsterbach (DE)
(74) Vertreter: Friedmann, Jürgen, Dr.-Ing.

(57) **Zusammenfassung**

Zur Fehlersuche bei analogen Teilnehmeranschlüssen in Fernsprechanlagen wird eine Gabel-Nachbildimpedanz (18) gezielt variiert. Das sich durch diese Variation geänderte Übertragungsverhalten wird dazu benutzt, Fehler im Anschlußbereich zu detektieren.

## Beschreibung

### Stand der Technik

Die Erfindung geht aus von einem Verfahren zur Fehlersuche bei analogen Teilnehmeranschlüssen in Fernsprechanlagen insbesondere mit Fernwartung.

In modernen Fernsprechanlagen mit analogen Teilnehmeranschlüssen, deren Signaldurchschaltung insbesondere mittels PCM-Verfahren erfolgt, wird häufig eine Funktionsschaltung als Bestandteil der Teilnehmeranschlußeinheit verwendet, mittels derer eine anwenderprogrammierte Einstellung übertragungstechnischer Parameter, wie z. B. relativer Signalpegel, Frequenzgang, Eingangsimpedanz der Anschlußleitung und Nachbildimpedanz möglich ist. Eine solche Funktionsschaltung ist beispielsweise als integrierter Baustein der Firma AMD erhältlich und wird als SLAC (Subscriber Line Audio-Processing Circuit) bezeichnet.

### Vorteile der Erfindung

Mit den Maßnahmen der Erfindung kann auf einfache Weise eine vorhandene Funktionsschaltung zur Fehlersuche benutzt werden. Über die gezielte Variation der Nachbildimpedanz, insbesondere der Gabelnachbildimpedanz, und nachfolgender Auswertung des sich dadurch ändernden Übertragungsverhaltens, insbesondere der Gabelübergangsdämpfung, kann auf die Leitungsimpedanz und unter bestimmten Randbedingungen auf einen Fehler wie Kurzschluß oder Leerlauf im Anschlußbereich geschlossen werden.

Alternativ hierzu kann unter Verwendung einer solchen Funktionsschaltung bei der automatischen Adaption der Gabel-Nachbildimpedanz durch Auswertung der automatisch eingestellten übertragungstechnischen Parameter ein Rückschluß auf einen Fehler im Anschlußbereich, wie z. B. Kurzschluß oder Leerlauf, gezogen werden.

Die erfindungsgemäßen Lösungen sind insbesondere im Zusammenhang mit von der Ferne zu wartender Systeme vorteilhaft. Ohne großen Zusatzaufwand können bei der Fernwartung insbesondere Leitungsfehler wie Kurzschlüsse festgestellt werden.

### Zeichnungen

Anhand der Zeichnungen werden Ausführungsbeispiele der Erfindung näher erläutert. Es zeigen
Figur 1 ein Blockschaltbild eines SLAC-Bausteins,
Figur 2 eine Meßschaltung zur Ermittlung der Gabelübergangsdämpfung,
Figur 3 eine Darstellung der Gabelübergangsdämpfung für unterschiedliche Betriebszustände und Fehlerarten und
Figur 4 eine weitere Darstellung der Gabelübergangsdämpfung.

### Beschreibung von Ausführungsbeispielen

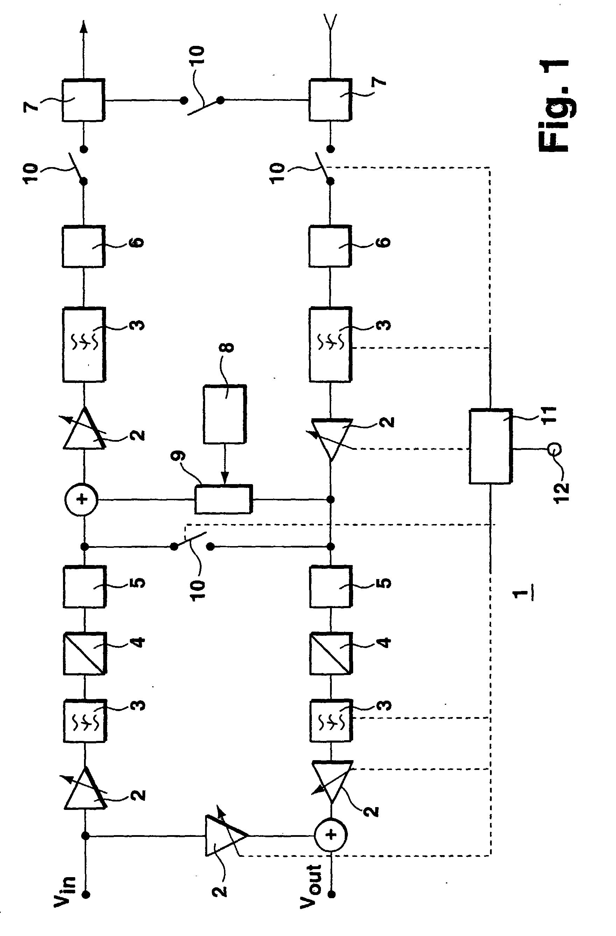

Figur 1 zeigt ein Blockschaltbild eines typischen SLAC (Subscriber Line Audio-Processing Circuit) - Bausteins. Mit einer solchen Funktionsschaltung läßt sich mit vorgegebenen übertragungstechnischen Parametern das übertragungstechnische Verhalten einer Fernmeldeanschlußleitung mitsamt angeschlossenem Teilnehmerapparat einstellen. So läßt sich z.B. die Eingangsimpedanz des Teilnehmeranschlusses den vorhandenen Leitungseigenschaften anpassen oder ein bestimmtes Übertragungsverhalten realisieren.

Wie Figur 1 zeigt, besteht eine solche Funktionsschaltung 1 im wesentlichen aus programmierbaren Verstärkern 2, programmierbaren digitalen Filtern 3, An- bzw. DA-Wandler 4, Dezimatoren bzw. Interpolatoren 5, Kompressoren bzw. Expandern 6 sowie Ausgangs- bzw. Eingangskreisen 7. Zur automatischen Adaption, d.h. beispielsweise zur Anpassung an einen Leitungswiderstand oder ein bestimmtes Übertragungsverhalten, ist ein Adapter 8 vorgesehen mit einer Einspeisungseinheit 9. Die eingezeichneten Schalter 10 werden wie die programmierbaren Verstärker 2 und Filter 3 von einer Steuereinheit 11 aus gesteuert. Über die Schnittstelle 12 werden bestimmte Einstellparameter wie Verstärkungs- und Dämpfungskoeffizienten, Filterkoeffizienten und Steuersignale für die Schalter geladen. Die eingestellten Parameter sowie gemessene Übertragungsparameter lassen sich über diese Schnittstelle 12 auch auslesen. Natürlich kann auch eine separate Einrichtung zur Messung und Auswertung der Übertragungsparameter vorgesehen sein.

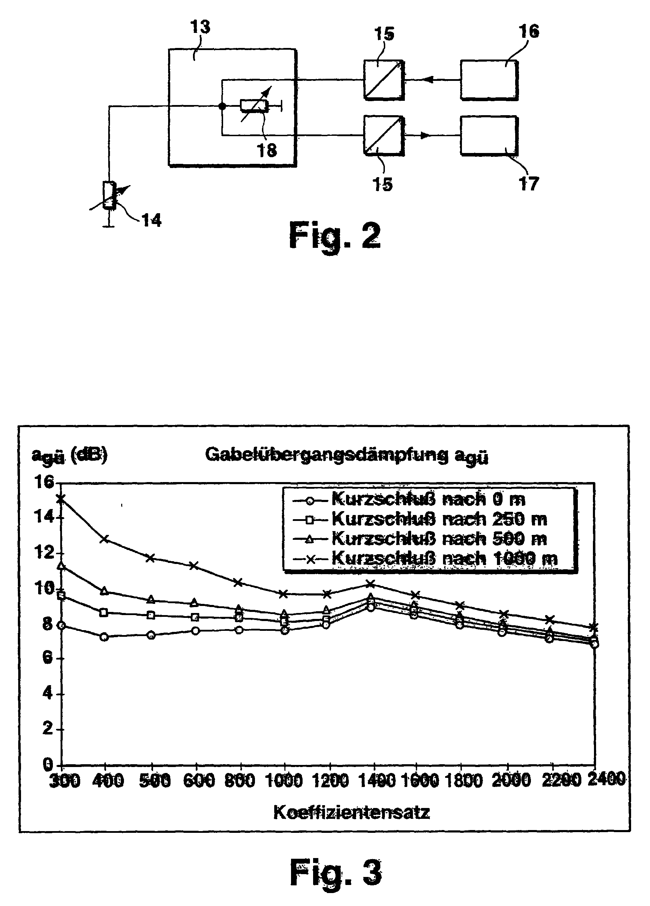

In einer ersten Ausgestaltung der Erfindung wird eine Nachbildimpedanz insbesondere die Gabel-Nachbildimpedanz 18 gezielt variiert und das sich dadurch geänderte Übertragungsverhalten gemessen. Figur 2 zeigt eine Meßschaltung hierzu. An die Gabel 13 ist eine Nachbildtestimpedanz 14 angeschlossen, deren Impedanzwert beispielsweise in Dekaden einstellbar ist. Über AD-Wandler 15 sind beispielsweise ein Signalgenerator 16 und ein Signalempfänger 17 angeschlossen. Mittels der Funktionsschaltung 1 werden zu jedem Widerstandewert der Nachbildtestimpedanz 14 unterschiedliche Filterkoeffizientensätze eingelesen.

Die Nachbildtestimpedanz 14 dient zur Überprüfung der eingestellten Gabel-Nachbildimpedanz 18. Ist die Nachbildtestimpedanz 14 annähernd gleich der Gabel-Nachbildimpedanz 18, so wird die Dämpfung eines vom Signalgenerator 16 eingespeisten Signale am Signalempfänger 17 ein hohes Maß erfahren haben, ausgedrückt durch die Gabelübergangsdämpfung agü.

Weiterhin kann mittels Variation der Nachbildtestimpedanz 14, in dem Maße wie eine fehlerbehaftete Leitung, das Übertragungsverhalten der Funktionsschaltung 1 überprüft werden. Das Ergebnis dieser Überprüfung ist die Grundlage für die Bewertung der agü im Falle, daß im Betrieb anstelle der Nachbildtestimpedanz 14, die Eingangsimpedanz der angeschalteten (evtl. fehlerbehafteten) Leitung vorhanden ist.

Im Betriebefall ist die Leitungseingangsimpedanz (evtl. fehlerbehaftet) invariant, und zur Ermittlung dieser Impedanz wird durch Ändern der Einstellparameter, d.h. insbesondere der Filterkoeffizienten die Gabel-Nachbildimpedanz 18 variiert.

Figur 3 zeigt Meßkurven für die Gabelübergangsdämpfung a_{gü} [dB] für unterschiedliche Koeffizientensätze der Gabel-Nachbild-Impedanz 18 im Bereich von 300 bis 2400 Ohm bei einer Frequenz von 300 Hz. Es sind Kurzschlüsse für die Entfernungen 0, 250, 500 und 1000 m dargestellt. Zu erkennen ist, daß der Wert der Gabelübergangsdämpfung nich größer als 15 dB wird. Als Indiz für einen Fehler, speziell einen Kurzschluß, kann ein Schwellwert angenommen werden, den die Gabelübergangsdämpfung bei Kurzschluß immer unterschreiten muß. Auch aus dem Verlauf der Anpassung an die Leitungsimpedanz kann auf einen Kurzschluß geschlossen werden. Wie Figur 3 zeigt, stellen sich bei Koeffizientensätzen ab 300 Ohm schon teilweise die relativen Pegel von 7 dB ein, wobei der Receive-Pegel ar in diesem Beispiel bei - 7 db und der Sende-Pegel at bei 0 db liegen. Da bei Kurzschlüssen bis 1000 m Leitungslänge der Widerstand nicht mehr als ca. 130 Ohm (Widerstandsbelag des Kabels für einen Querschnitt von 0,6 mm) im Normalfall betragen kann, wird im Falle eines Kurzschlusses bei 0 m (ca. 0 Ohm) und einem eingelesenen Filterkoeffizientensatz für 300 Ohm die schlechteste Anpassung erreicht, der Betrag der Gabelübergangsdämpfung ist hier am geringsten. Bei optimaler Anpassung wäre die Gabelübergangsdämpfung am grössten. In diesem Falle stimmt der Wert der Leitungsimpedanz mit dem Wert des Filterkoeffizientensatzes (Gabel-Nachbildimpedanz 18 der Gabel 13) annähernd überein. Für eine maximale Leitungslänge von 1000 m liegt also das Maximum der Gabelübergangsdämpfung im Bereich von Koeffizientensätzen von < 300 Ohm, beispielsweise bei einer Länge von 1000 m zwischen Koeffizientensätzen von 100 Ohm und 200 Ohm. Bei einer Einschränkung der zulässigen Kabellänge von 1000 m ergeben sich mit größer werdenden Filterkoeffizientensätzen Gabelübergangswerte von nur noch ungefähr 7 dB, es werden also annähernd die relativen Pegel gemessen.

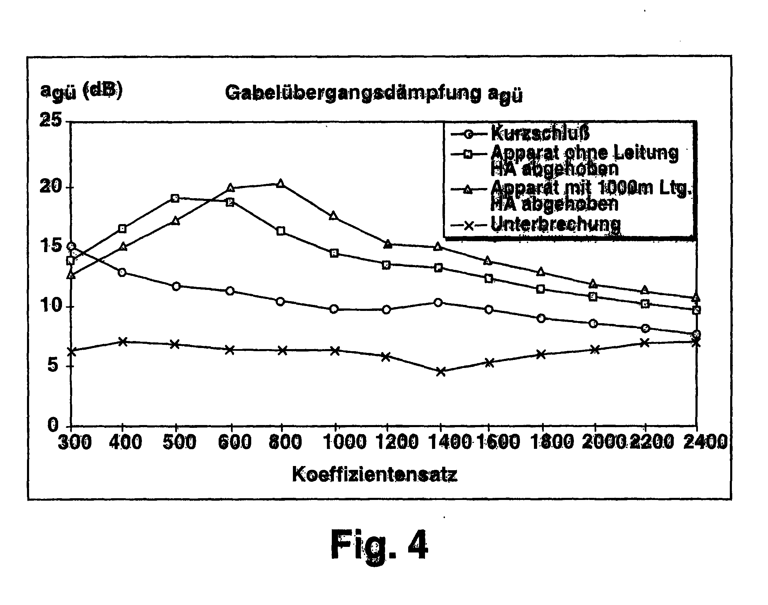

Wie aus Figur 4 (Koeffizientensätze der Gabel-Nachbildimpedanz 18 mit zugehöriger Gabelübergangsdämpfung agü für f = 300 Hz) hervorgeht, lassen sich die Fälle Kurzschluß und 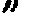 Handapparat abgehoben 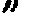 unterscheiden. Im Kurzschlußfall bilden sich Maxima aus, die bei Koeffizientensätzen unter 300 Ohm liegen. Im Fall Handapparat abgehoben erhält man deutliche Maxima, welche Werte von über 20 dB erreichen können. Diese Dämpfungswerte sind natürlich noch abhängig vom Apparatetyp und von der Leitungslänge. Erreicht man jetzt Kurvenverläufe von Kurzschluß und Handapparat abgehoben, die unter jeder Bedingung gewisse Mindestabstände zueinander aufweisen, lassen sich beide Leitungszustände immer voneinander unterscheiden. Um diesen Mindestabstand zu gewährleisten, wurden aus den Diagrammen Kurzschluß und Handapparat abgehoben die kritischsten Dämpfungswerte ausgewählt, die jeweils den schlechtesten und somit geringsten Abstand zueinander aufweisen. Diese Kurven sind nun unabhängig vom angeschlossenen Apparate typ.

In Figur 4 zeigt sich, daß ein Mindestabstand von ungefähr 5 dB im Bereich der Koeffizientensätze für 500 Ohm bis 800 Ohm erkennbar ist. Deutlich macht sich auch der Einfluß der Leitung bemerkbar, das Maximum (von Handapparat abgehoben) verschiebt sich mit zunehmender Leitungslänge nach rechts. Auf jeden Fall stellen sich die Maxima irgendwo in diesem Bereich (500 bis 800 Ohm) ein. Es bleibt also gleich, ob ein Leitungsstück von 1 m oder auch 1000 m vorliegt, der Mindestabstand zum Kurzschluß beträgt minimal 5 dB.

Es ist somit möglich, mit nur einem bestimmten Koeffizientensatz eine Entscheidung zu treffen. Setzt man diese Entscheidungsschwelle auf beispielsweise 15 dB, so liegt man im Bereich der Filterkoeffizientensätze für 500 Ohm bis 800 Ohm einmal oberhalb (Handapparat abgehoben), oder einmal unterhalb (Kurzschluß) der 15 dB-Schwelle. Dies gilt generell bis zu einer Gesamtleitungslänge von 1 km.

Da sich für den Kurzschlußfall die Maxima im Bereich der Koeffizientensätze deutlich kleiner 300 Ohm befinden und im Falle Handapparat abgehoben die Maxima im Bereich 500 Ohm bis 1000 Ohm liegen, ergeben sich deutliche Unterschiede bei der Gabelübergangsdämpfung. Im Bereich 500 Ohm bis 1000 Ohm beträgt die Differenz der Gabelübergangsdämpfung a_{gü} mindestens 5 dB zwischen Kurschluß und Handapparat abgehoben. Wählt man nun einen Koeffizientensatz von 600 Ohm, so erhält man eine Differenz von 7,6 dB. Hiermit kann eine eindeutige Erkennung zwischen diesen zwei Leitungszuständen mit nur einer Messung gewährleistet werden.

Bei einer Alternativiösung werden mittels der automatischen Adaption der Gabelnachbildimpedanz (Leitungsanpassung) unter Verwendung der Funktionseinheit 1 die zugehörigen Einstellparameter (Satz von übertragungstechnischen Parameter) über die Schnittstelle 12 ausgelesen und ausgewertet. Die automatische Adaption wird insbesondere so vorgenommen, daß in diesem Falle die Gabel-Übergangsdämpfung ihr Maximum erreicht. Ergeben sich Werte, die darauf schliessen lassen, daß eine Anpassung nicht zu erreichen ist, Einstellparameter unterscheiden sich deutlich vom Anpassungsfall, kann auch in diesem Falle auf einen Leitungsfehler geschlossen werden.

Die Funktionseinheit 1 ist normalerweise sowieso vorhanden, insbesondere bei Geräten mit Fernwartung, und wird erfindungsgemäß gleichzeitig dazu verwendet, Fehler zu erkennen. Natürlich kann auch auf eine zusätzliche Funktionsschaltung zurückgegriffen werden, wenn diese nicht sowieso vorgesehen ist.

## Patentansprüche

1. Verfahren zur Fehlersuche bei analogen Teilnehmeranschlüssen in Fernsprechanlagen, insbesondere mit Fernwartung, mit folgenden Schritten:
- insbesondere mittels einer Funktionsschaltung (1) zur Einstellung eines gewünschten Übertragungsverhaltens wird eine Gabel-Nachbildimpedanz (18) gezielt variiert,
- das sich durch diese gezielte Variation geänderte Übertragungsverhalten wird dazu benutzt, einen Fehler, wie z.B. einen Kurzschluß, im Anschlußbereich zu detektieren.

2. Verfahren zur Fehlersuche bei analogen Teilnehmeranschlüssen in Fernsprechanlagen, insbesondere mit Fernwartung, mit folgenden Schritten:
- insbesondere mittels einer Funktionsschaltung (1) zur Einstellung eines gewünschten Übertragungsverhaltens wird anhand eines Satzes übertragungstechnischer Parameter eine Gabel-Nachbildimpedanz (18) automatisch adaptiert, insbesondere im Sinne einer Leitungsanpassung,
- die bei der automatischen Adaption der Gabel-Nachbildimpedanz (18) eingestellten übertragungstechnischen Parameter werden ausgewertet, um Rückschlüsse auf Fehler, wie z.B. Kurzschluß, im Anschlußbereich zu ziehen.

3. Verfahren nach einem der Ansprüche 1 oder 2, dadurch gekennzeichnet, daß die Gabel-Nachbildimpedanz (18) mit digitalen Filtern realisiert wird, deren Koeffizienten Einstellparameter darstellen.

4. Verfahren nach Anspruch 2, dadurch gekennzeichnet, daß die automatische Adaption der Gabel-Nachbildimpedanz (18) derart vorgenommen wird, daß in diesem Falle die Gabelübergangsdämpfung ihr Maximum erreicht.

5. Verfahren nach einem der Ansprüche 1 bis 4, dadurch gekennzeichnet, daß in den Fällen, wo bei der gezielten Variation der Gabel-Nachbildimpedanz (18) oder der automatischen Adaption der Gabel-Nachbildimpedanz (18) die gemessene Gabelübergangsdämpfung kleiner als ein vorgegebener Wert ist und/oder keine Anpassung der Gabel-Nachbildimpedanz (18) an die Leitungseingangsimpedanz erreichbar ist, ein Fehler angenommen wird.

6. Verfahren nach einem der Ansprüche 1 bis 5, dadurch gekennzeichnet, daß als Funktionsschaltung (1) ein Baustein bestehend aus programmierbaren Filtern und Verstärkern verwendet wird, mittels derer die Gabel-Nachbildimpedanz (18) durch Einstellung von Filterkoeffizienten und Verstärkungskoeffizienten veränderbar ist.

7. Verfahren nach einem der Anspräche 1 bis 6, dadurch gekennzeichnet, daß als Funktionsschaltung (1) eine Baugruppe verwendet wird, die sowie für andere Zwecke, z.B. für eine Fernwartung vorgesehen ist.
